# EUROPEAN PATENT APPLICATION

(11) **EP 4 788 024 A1**
(43) Date of publication of application: **05.08.2026**
(21) Application number: 24872068.2
(22) Date of filing: 20.09.2024
(51) Int. Cl.: H04W 72/25, H04W 4/40, H04W 72/40, H04W 72/54, H04W 92/18

(54) **BASE STATION DEVICE, USER TERMINAL DEVICE, CONTROL METHOD, PROGRAM, AND COMMUNICATION SYSTEM**

(30) Priority: 29.09.2023 JP 2023169152
(71) Applicant: Canon Kabushiki Kaisha, Tokyo 146-8501 (JP)
(72) Inventor: SHOJI Kazuki, Tokyo 146-8501 (JP)
(74) Representative: Canon Europe Limited
(86) International application number: PCT/JP2024/033607
(87) International publication number: WO 2025/070277

(57) **Abstract**

A base station apparatus including communication means for executing wireless communication different from Vehicle to Everything (V2X) communication with a first terminal, acquisition means for acquiring a first radio resource to be used by the communication means and a second radio resource to be used in the V2X communication performed by a second terminal, and control means for controlling the wireless communication of the communication means.

## Description

### Technical Field

The present disclosure relates to a base station apparatus, a user terminal apparatus, a control method, a program, and a communication system.

### Background Art

Vehicle to Everything (V2X) is a vehicle communication technique that enables network connections and mutual cooperation between vehicles, vehicles and roadside apparatuses, and vehicles and pedestrians. V2X is assumed to be used to support safe driving by warning drivers of hidden dangers that cannot be detected by conventional in-vehicle apparatuses such as cameras and Light Detection and Ranging (LiDAR).

In V2X, a transmitter can communicate directly with a receiver via a sidelink. Unlike a Uu link (air interface between a network apparatus and a user apparatus) of a cellular network, sidelink enables communication via a newly defined PC5 interface for V2X (air interface between V2X apparatuses). The frequency band used for this communication is prescribed as Band 47 (5855 MHz to 5925 MHz) in the 3rd Generation Partnership Project (3GPP^{®}) specifications.

Since V2X is assumed to be used for safety-related applications, high reliability is demanded in wireless communication, and a method for reducing radio resource collisions induced by wireless communication performed by other communication terminals is required. PTL 1 describes the following technique. A terminal performing sidelink communication estimates or predicts PSSCH interference based on a PSCCH received from another terminal performing sidelink communication. PSCCH is an abbreviation for Physical Sidelink Control Channel, and PSSCH is an abbreviation for Physical Sidelink Share Channel. The PSSCH is processed based on the estimated interference.

### Citation List

### Patent Literature

PTL 1: Japanese Patent Laid-Open No. 2019-050559

### Summary of Invention

### Technical Problem

In the wireless communication method described in PTL 1, a plurality of terminals for performing sidelink communication receives a PSCCH, and makes a schedule for the radio resources of the PSSCH based on the reception results so as to reduce interference with other PSSCHs.

However, the wireless communication method as described in PTL 1 cannot reduce radio resource collisions with base station apparatuses and terminal apparatuses that perform wireless communication other than V2X. An example of the wireless communication other than V2X is NR Unlicensed Spectrum (NR-U). The NR-U is a technique for operating a communication system based on the Third Generation Partnership Project (3GPP^{®}) specifications in an unlicensed band that does not require a license from the authorities of each country. In the NR-U, the frequency bands used for communication are the 5 GHz band and the 6 GHz band. The 3GPP^{®} specifications define the 5 GHz band as Band 46 (5150 MHz to 5925 MHz) and the 6 GHz band as Band 102 (5925 MHz to 6425 MHz) and Band 104 (6425 MHz to 7125 MHz). Of these frequency bands, the 5 GHz band in particular overlaps with the frequency band used for V2X sidelink communication, raising concerns about radio resource collisions. Furthermore, in order to coexist with other communication systems, the NR-U performs carrier sensing before transmission to ensure that no other wireless apparatuses are using the same frequency. However, the NR-U does not have a unit for identifying the radio resources to be used by the V2X terminal apparatus, and therefore radio resource collisions may occur depending on the timing at which carrier sensing is performed.

The present disclosure has been made in consideration of at least one of the above-described issues. An aspect of the present disclosure provides a mechanism for reducing collisions of radio resources that may occur between V2X sidelink communication and wireless communication other than V2X.

### Solution to Problem

A base station apparatus according to one aspect of the present disclosure includes:
communication means for executing wireless communication different from Vehicle to Everything (V2X) communication with a first user terminal apparatus;
first determination means for determining whether a collision occurs between a first radio resource to be used in the wireless communication of the communication means and a second radio resource to be used in the V2X communication performed by a second user terminal apparatus different from the first user terminal apparatus; and
control means for controlling the wireless communication of the communication means based on a result of determination by the first determination means. Advantageous Effects of Invention

According to one aspect of the present disclosure, it is possible to provide a mechanism for reducing a collision of radio resources that may occur between V2X sidelink communication and wireless communication other than V2X.

### Brief Description of Drawings

[Fig. 1] Fig. 1 is a block diagram of a base station apparatus.
[Fig. 2] Fig. 2 is a software functional block diagram of the base station apparatus in a first embodiment.
[Fig. 3] Fig. 3 is a block diagram of a terminal apparatus.
[Fig. 4] Fig. 4 is a software functional block diagram of the terminal apparatus in the first embodiment.
[Fig. 5] Fig. 5 is a configuration diagram of a wireless communication system in the first embodiment.
[Fig. 6] Fig. 6 is a diagram illustrating an example of a data structure of Sidelink Control Information (SCI).
[Fig. 7] Fig. 7 is a flowchart of operations by the base station apparatus in the first embodiment.
[Fig. 8A] Fig. 8A is a software functional block diagram of a base station apparatus in a second embodiment.
[Fig. 8B] Fig. 8B is a software functional block diagram of a terminal apparatus in the second embodiment.
[Fig. 9A] Fig. 9A is a flowchart of operations by the terminal apparatus in the second embodiment.
[Fig. 9B] Fig. 9B is a flowchart of operations by the base station apparatus in the second embodiment.
[Fig. 10] Fig. 10 is a software functional block diagram of a base station apparatus in a third embodiment.
[Fig. 11] Fig. 11 is a configuration diagram of a wireless communication system in the third embodiment.
[Fig. 12] Fig. 12 is a diagram illustrating an example of a data structure of SCI.
[Fig. 13] Fig. 13 is a diagram illustrating an example of a data structure of SCI.
[Fig. 14] Fig. 14 is a flowchart of operations by the base station apparatus in the third embodiment.
[Fig. 15] Fig. 15 is a flowchart of operations by a modification example of the base station apparatus in the third embodiment.

### Description of Embodiments

Hereinafter, each embodiment will be described in detail with reference to the accompanying drawings.

### [First Embodiment]

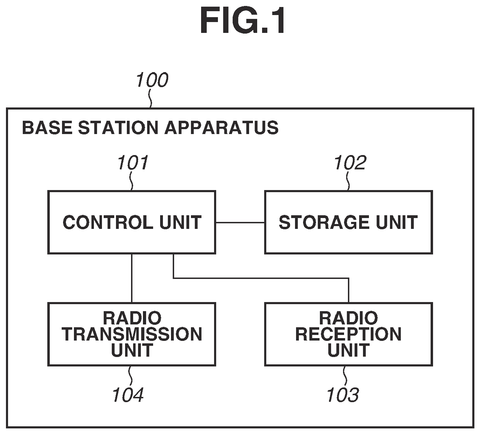

Fig. 1 is a diagram illustrating an example of a functional configuration of a base station apparatus 100 according to the present embodiment.

The base station apparatus 100 includes a control unit 101, a storage unit 102, a radio reception unit 103, and a radio transmission unit 104.

The control unit 101 controls the entire base station apparatus 100 by executing control programs stored in the storage unit 102. The control unit 101 consists of one or more processors, such as a central processing unit (CPU) or micro processing unit (MPU), and controls the entire apparatus by executing the control programs read into a random access memory (RAM), which is the storage unit 102. The processes performed by the control unit 101, which will be described below with reference to the flowcharts, can also be implemented by using a hardware circuit such as an ASIC or FPGA. Note that ASIC is an abbreviation for Application Specific Integrated Circuit. FPGA is an abbreviation for Field Programmable Gate Array. Furthermore, the processes described below with reference to the flowcharts can also be implemented by cooperation between a hardware circuit and a processor such as a CPU or MPU.

The storage unit 102 stores the control programs to be executed by the control unit 101 and various types of information such as communication parameters. Various operations described below are performed by the control unit 101 executing the control programs stored in the storage unit 102. The storage unit 102 may include a main storage unit and an auxiliary storage unit. The main storage unit is a read-only memory (ROM) or a RAM, for example. The main storage unit may store or temporarily save programs and data such as an operating system (OS), which is basic software executed by the control unit 101, and application software. The auxiliary storage unit is a hard disk drive (HDD) or a solid state drive (SSD), for example, and may store data related to application software and the like. For example, the control programs stored in the non-volatile storage area are expanded into the RAM and executed by the processor constituting the control unit 101. In this way, the control unit 101 and the storage unit 102 may function as a so-called computer.

The radio reception unit 103 receives signals conforming to the Third Generation Partnership Project (3GPP)^{®} standard. Although the description here is directed to 5G, the present disclosure is also applicable to standards other than 5G (e.g., 5G Advanced, 6G, and the like).

The radio transmission unit 104 transmits signals conforming to the 3GPP^{®} standard.

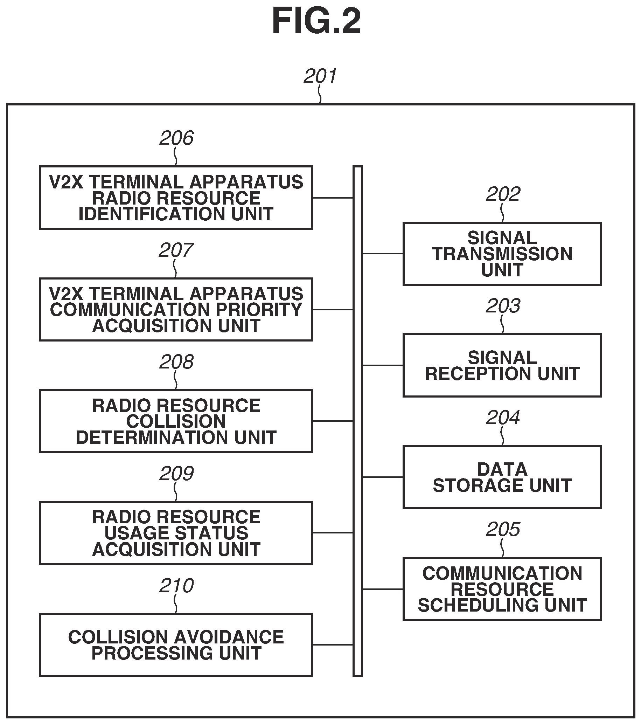

Fig. 2 is a block diagram illustrating a configuration example of a software functional block of the base station apparatus 100.

A software functional block 201 of the base station apparatus 100 includes a signal transmission unit 202, a signal reception unit 203, a data storage unit 204, a communication resource scheduling unit 205, and a V2X terminal apparatus radio resource identification unit 206. The software functional block 201 also includes a V2X terminal apparatus communication priority acquisition unit 207, a radio resource collision determination unit 208, and a radio resource usage status acquisition unit 209. The software functional block 201 also includes a collision avoidance processing unit 210.

In this specification, a radio resource refers to a predetermined domain represented in the frequency domain and the time domain. For example, in 5G, the frequency domain and the time domain are represented by subcarriers and symbols. A symbol is also referred to as an orthogonal frequency-division multiplexing (OFDM) symbol. A domain represented by one subcarrier and one symbol is referred to as a resource element. Further, 12 consecutive subcarriers in the frequency domain are referred to as a resource block. Further, 14 consecutive symbols in the time domain are referred to as a slot.

A collision of radio resources refers to a situation in which there is an overlap in some or all of the radio resources to be used for communication by two different apparatuses. For example, in the present embodiment, a collision of radio resources is expressed as a situation in which some or all of the radio resources to be used for communication by the base station apparatus 100 overlap with some or all of the radio resources to be used by a V2X terminal apparatus.

The signal transmission unit 202 transmits signals conforming to the 3GPP^{®} standard.

The signal reception unit 203 receives signals conforming to the 3GPP^{®} standard.

The data storage unit 204 stores and holds the software itself and information such as authentication information.

The communication resource scheduling unit 205 makes a schedule for resources of wireless communication different from V2X communication.

The V2X terminal apparatus radio resource identification unit 206 identifies radio resources to be used for communication by a V2X terminal apparatus 700 described below. In the present embodiment, the V2X terminal apparatus radio resource identification unit 206 identifies radio resources to be used for communication by the V2X terminal apparatus 700, based on the SCI received by the signal reception unit 203 via the PSCCH. SCI is an abbreviation for Sidelink Control Information, and represents sidelink control information.

Further details of the method for identifying radio resources will be described below.

The V2X terminal apparatus communication priority acquisition unit 207 acquires a priority of data that is scheduled to be transmitted by the V2X terminal apparatus 700 described below. In the present embodiment, the V2X terminal apparatus communication priority acquisition unit 207 acquires the priority based on the SCI received by the signal reception unit 203 via the PSCCH. Further details of the priority acquisition method will be described below.

The radio resource collision determination unit 208 determines whether there is a collision between the radio resources to be used for communication of the base station apparatus 100 and the radio resources identified by the V2X terminal apparatus radio resource identification unit 206.

The radio resource usage status acquisition unit 209 acquires the radio resource usage status of the sidelink communication frequency band.

The collision avoidance processing unit 210 controls communication between the base station apparatus 100 and a terminal apparatus 200 based on the result of determination by the radio resource collision determination unit 208. Specifically, if it is determined that there is a collision of radio resources, the collision avoidance processing unit 210 restricts or prohibits radio communication between the base station apparatus 100 and the terminal apparatus 200 so as to avoid the collision. For example, the collision avoidance processing unit 210 may perform control such that the radio resources to be used for communication by the V2X terminal apparatus 700 will not be used in the radio communication between the base station apparatus 100 and the terminal apparatus 200, or may stop (prohibit) the radio communication itself between the base station apparatus 100 and the terminal apparatus 200. Details of the collision avoidance processing performed by the collision avoidance processing unit 210 will be described below.

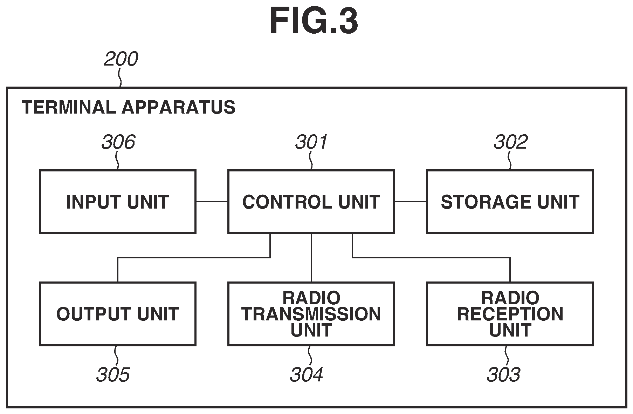

Fig. 3 is a diagram illustrating an example of a functional configuration of the terminal apparatus 200 according to the present embodiment.

The terminal apparatus 200 includes a control unit 301, a storage unit 302, a radio reception unit 303, a radio transmission unit 304, an output unit 305, and an input unit 306.

The control unit 301 controls the entire terminal apparatus 200 by executing control programs stored in the storage unit 302. The control unit 301 consists of one or more processors such as a CPU or MPU, and controls the entire apparatus by executing the control programs read into the RAM, which is the storage unit 302. Each process performed by the control unit 301, which will be described below with reference to the flowcharts, can also be implemented by using a hardware circuit such as an ASIC or FPGA. Furthermore, the processes described below with reference to the flowcharts can also be implemented by cooperation of the hardware circuit and the processor such as a CPU or MPU.

The storage unit 302 stores control programs to be executed by the control unit 301 and various types of information such as communication parameters. Various operations described below are performed by the control unit 301 executing the control programs stored in the storage unit 302. The storage unit 302 may include a main storage unit and an auxiliary storage unit. The main storage unit is a ROM or a RAM, for example. The main storage unit may store or temporarily save programs such as an OS, which is basic software, and application software executed by the control unit 101, and data. The auxiliary storage unit is an HDD or SSD, for example, and may store data related to application software and the like. For example, the control programs stored in a non-volatile memory area are expanded into the RAM and executed by the processor constituting the control unit 301. In this way, the control unit 301 and the storage unit 302 may function as a computer.

The radio reception unit 303 receives signals conforming to the 3GPP^{®} standard.

The radio transmission unit 304 transmits signals conforming to the 3GPP^{®} standard.

The output unit 305 is an output unit that performs various outputs. The output unit 305 may be capable of outputting visually perceptible information like a liquid crystal display (LCD) or a light emitting diode (LED), or may be capable of outputting sound like a speaker. The output unit 305 may have a function of outputting at least one of visual information and sound information.

The input unit 306 allows a user to perform various inputs and the like. The input unit 306 also acquires sensor information.

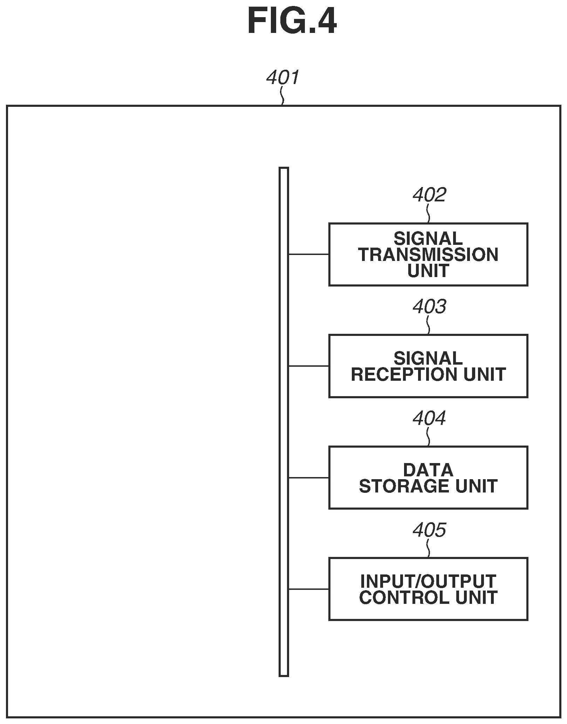

Fig. 4 is a block diagram illustrating a configuration example of a software functional block of the terminal apparatus 200.

A software functional block 401 of the terminal apparatus 200 includes a signal transmission unit 402, a signal reception unit 403, a data storage unit 404, and an input/output control unit 405.

The signal transmission unit 402 transmits signals conforming to the 3GPP^{®} standard.

The signal reception unit 403 receives signals conforming to the 3GPP^{®} standard.

The data storage unit 404 stores and holds software itself and information such as authentication information.

The input/output control unit 405 performs control processing of the output unit 305 and the input unit 306 illustrated in Fig. 3.

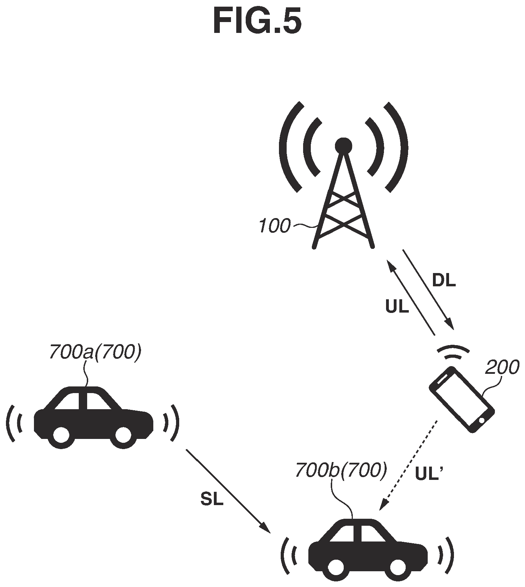

Fig. 5 is a diagram illustrating a configuration example of a wireless communication system according to the present embodiment. As illustrated in Fig. 5, the wireless communication system according to the present embodiment includes the base station apparatus 100, the terminal apparatus 200, and the V2X terminal apparatuses 700. Wireless communication between the base station apparatus 100 and the terminal apparatus 200 is a source of interference that may induce a collision of radio resources with respect to wireless communication between a V2X terminal apparatus 700a and a V2X terminal apparatus 700b. Wireless communication between the base station apparatus 100 and the terminal apparatus 200 is performed via an uplink UL or a downlink DL. Furthermore, wireless communication between the V2X terminal apparatus 700a and the V2X terminal apparatus 700b is performed via a sidelink SL.

In reality, there can be large numbers of base station apparatuses, terminal apparatuses, and V2X terminal apparatuses, but Fig. 5 illustrates only the numbers of apparatuses necessary for explanation.

In the present embodiment, a case will be described in which the 5G communication technique is used as a method of wireless communication between the base station apparatus 100 and the terminal apparatus 200 and between the V2X terminal apparatus 700a and the V2X terminal apparatus 700b. The 5G communication technique is a communication technique referred to as 5G-New Radio (NR) whose specifications are formulated by the 3GPP^{®}, for example. The base station apparatus 100 and the terminal apparatus 200 communicate wirelessly using NR Unlicensed Spectrum (NR-U), which is a function for performing 5G-NR communication in an unlicensed band. In the vicinity of the base station apparatus 100 and the terminal apparatus 200, the V2X terminal apparatus 700a and the V2X terminal apparatus 700b communicate wirelessly using a sidelink method.

In the present embodiment, it is assumed that the unlicensed 5.9 GHz band is used as the operational frequency band for wireless communication via the uplink UL or the downlink DL between the base station apparatus 100 and the terminal apparatus 200. It is also assumed that the unlicensed 5.9 GHz band is used for wireless communication via the sidelink SL between the V2X terminal apparatus 700a and the V2X terminal apparatus 700b.

Regarding the operational frequency band used in communication between the base station apparatus 100 and the terminal apparatus 200, either the uplink UL or the downlink DL may be a licensed band.

In this frequency band, the communication between the base station apparatus 100 and the terminal apparatus 200 and the communication between the V2X terminal apparatus 700a and the V2X terminal apparatus 700b are independent communications from each other, and therefore a collision of radio resources can be induced.

For example, a collision of radio resources can be induced as in the case of UL' indicated by the dotted line and SL indicated by the solid line in Fig. 5. That is, the radio resources to be used by the V2X terminal apparatus 700a in transmitting a radio signal to the V2X terminal apparatus 700b via the sidelink SL may collide with the radio resources to be used by the terminal apparatus 200 in transmitting a radio signal to the base station apparatus 100 via the uplink UL.

Hereinafter, a configuration will be described in which the base station apparatus 100 identifies radio resources to be used for communication by the V2X terminal apparatus 700, and determines whether the identified radio resources collide with radio resources to be used by the base station apparatus 100. If it is determined that there is a collision of the radio resources, the base station apparatus 100 controls the identified radio resources so as not to be used in communication between the base station apparatus 100 and the terminal apparatus 200.

In 5G communication technique, communication devices that perform wireless communication using the sidelink method transmit and receive SCI, which indicates scheduling information for the sidelink method. The SCI is information transmitted using a Physical Sidelink Control Channel (PSCCH) or a Physical Sidelink Shared Channel (PSSCH).

The V2X terminal apparatus 700a can reserve communication resources that are scheduled to be used in the future by transmitting SCI to the V2X terminal apparatus 700b by using the PSCCH or PSSCH. The PSCCH is a channel that is mainly used for transmitting and receiving control information for performing wireless communication using the sidelink method. The PSSCH is a channel that is mainly used for transmitting and receiving data to be transmitted. In the case of using the PSSCH to transmit SCI, the SCI is transmitted in the state of being attached to the data to be transmitted.

In this specification, transmitting and receiving a signal via the PSCCH or the PSSCH is also referred to as "transmitting/receiving via the PSCCH or the PSSCH".

In the present embodiment, the V2X terminal apparatus 700a transmits SCI to the V2X terminal apparatus 700b by using the PSCCH. The base station apparatus 100 and/or the terminal apparatus 200 can receive the SCI transmitted by the V2X terminal apparatus 700a via the PSCCH.

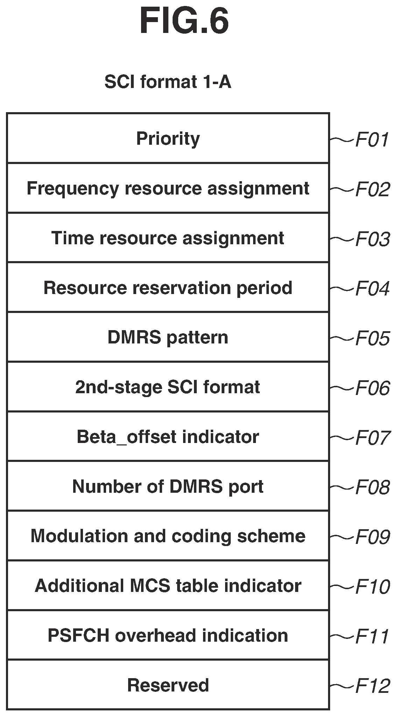

Fig. 6 is a diagram illustrating an example of SCI on the PSCCH according to an embodiment. Specifically, Fig. 6 illustrates 'SCI format 1-A' used in the first and second modes of V2X communication. Referring to Fig. 6, the SCI in the PSCCH includes first to twelfth fields (F01 to F12) as control information for V2X communication.

The first field F01 is 'Priority', which represents the priority of data scheduled to be transmitted via the PSSCH. 'Priority' has a 3-bit value, where "000" is "1", followed by "001" which is "2", and so on up to "111", representing values from 1 to 8. Smaller values indicate higher priority.

In V2X communication, periodic message-type CAM, event-triggered message-type DENM, and the like are transmitted via the PSSCH. CAM is an abbreviation for Cooperative Awareness Message, and DENM is an abbreviation for Decentralized Environmental Notification Message. CAM includes basic vehicle information such as vehicle dynamic status information like direction and speed, vehicle static data such as dimensions, external lighting status, and route details. DENM is a message generated in the event of an emergency such as a vehicle breakdown or accident. DENM has a higher priority than CAM.

Having a high priority means that, in the event of simultaneous transmissions, a message with a high priority is preferentially transmitted, or means that a message with a high priority among a plurality of messages is preferentially transmitted in terms of time.

The second field F02 is a 'Frequency resource assignment', which represents information about frequency resource assignment for the PSSCH.

The third field F03 is 'Time resource assignment', which represents information about time resource assignment for the PSSCH.

The fourth field F04 is a 'Resource reservation period', which represents the period for transmitting the PSSCH.

The fifth field F05 is 'DMRS pattern', which represents the pattern of a demodulation reference signal for the PSSCH.

The sixth field F06 is '2nd-stage SCI format', which represents the format of the 2nd-stage SCI transmitted via the PSSCH.

The seventh field F07 is a 'Beta_offset indicator', which represents the quantity of resources required for transmission.

The eighth field F08 is 'Number of DMRS port', which represents the number for the antenna port used for transmitting DMRS.

The ninth field F09 is 'Modulation and coding scheme', which represents the modulation and coding applied to the PSSCH.

The tenth field F10 is an 'Additional MCS table indicator', which represents an additional table for modulation and coding applied to the PSSCH.

The eleventh field F11 is a 'PSFCH overhead indication', which represents information for determining the transport block size (TBS) of the PSSCH.

The twelfth field F12 is 'Reserved', which represents reservation.

As described above, in the present embodiment, the V2X terminal apparatus communication priority acquisition unit 207 can acquire the priority based on the first field F01 of the first to twelfth fields (F01 to F12) of the SCI received by the PSCCH. The PSSCH resource configuration is also defined with the second to fourth fields (F02 to F04) among the first to twelfth fields (F01 to F12) of the SCI described above. These second to fourth fields (F02 to F04) constitute resource reservation information. Thus, in the present embodiment, the V2X terminal apparatus radio resource identification unit 206 can identify radio resources based on the resource reservation information included in the SCI received by the PSCCH. That is, the V2X terminal apparatus radio resource identification unit 206 can identify PSSCH radio resources to be used in communication between the V2X terminal apparatus 700a and the V2X terminal apparatus 700b.

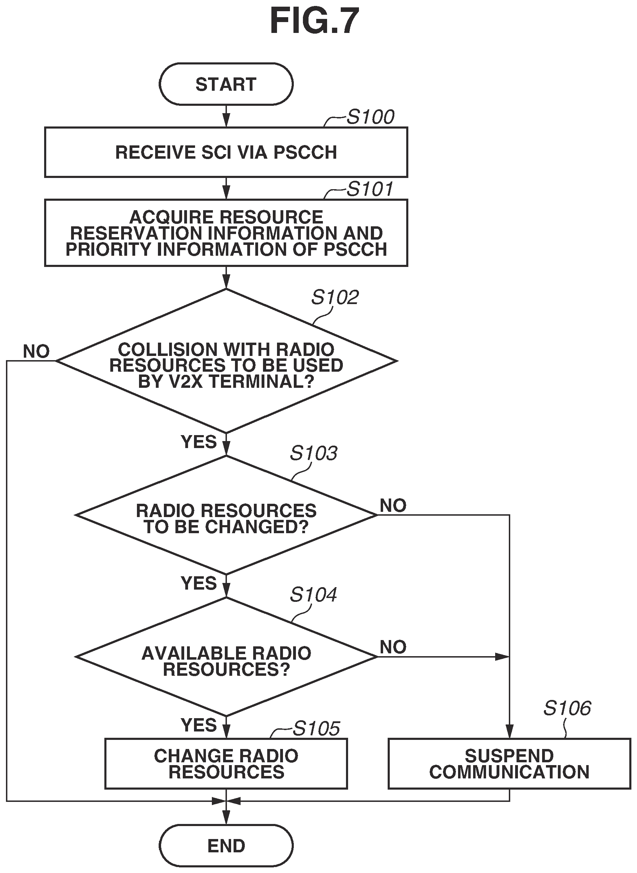

Fig. 7 is a flowchart for reducing a collision of radio resources that occurs between V2X sidelink communication and wireless communication other than V2X, which is performed in the base station apparatus 100 according to the present embodiment. This flowchart may also be started by the control unit 101 before the base station apparatus 100 starts communication with the terminal apparatus 200. Alternatively, this flowchart may also be started by the control unit 101 when the terminal apparatus 200 connects to the base station apparatus 100.

This flowchart is performed by the control unit 101 reading and executing a computer program stored in the storage unit 102. After the flowchart is started, the flowchart is executed continuously while the base station apparatus 100 is operating.

After starting the processing in Fig. 7, in step S100, the base station apparatus 100 receives SCI via the PSCCH.

In step S101 following step S100, the base station apparatus 100 acquires resource reservation information and priority information of the PSSCH based on the SCI received in step S100.

The base station apparatus 100 identifies the radio resources to be used by the V2X terminal apparatus 700 based on the acquired resource reservation information.

In step S102, the base station apparatus 100 determines whether the radio resources to be used in communication with the terminal apparatus 200 collide with the radio resources to be used by the V2X terminal apparatus 700 identified in step S101.

If the result of determination in step S102 is No, the processing is terminated. If the result of determination in step S102 is Yes, in step S103, the base station apparatus 100 determines whether to change the radio resources that are scheduled to be used in communication with the terminal apparatus 200. This determination may also be based on the priority information acquired in step S101. For example, if the value of the acquired priority value is "1" and the threshold serving as the criterion for determining whether the priority is high or low is "3", the result of determination in step S103 becomes No.

If the result of determination in step S103 is No, in step S106, the base station apparatus 100 suspends communication with the terminal apparatus 200. If the result of determination in step S103 is Yes, in step S104, the base station apparatus 100 determines whether there are available radio resources. That is, in step S104 following step S103, the base station apparatus 100 determines whether there are available free radio resources based on the resource reservation information acquired in step S101.

If the result of determination in step S104 is No, in step S106, the base station apparatus 100 suspends communication with the terminal apparatus 200. If the result of determination in step S104 is Yes, the base station apparatus 100 changes the radio resources to be used to available free radio resources other than the radio resources to be used by the V2X terminal apparatus 700.

As described above, it is possible to reduce the collision of radio resources that may occur between V2X sidelink communication and wireless communication other than V2X.

In the present embodiment, as described above, the above advantageous effect is achieved by receiving SCI through the PSCCH. Alternatively, the same function may also be implemented by using a portion other than the SCI in the PSCCH including the SCI.

### [Second Embodiment]

In a second embodiment, the functional configuration of a base station apparatus, the functional configuration of a terminal apparatus, and the configuration of a wireless communication system may be the same as the configurations as in the first embodiment illustrated in Figs. 1, 3, and 5.

In the first embodiment, the base station apparatus 100 identifies radio resources to be used for communication by the V2X terminal apparatus 700, and determines whether the identified radio resources collide with radio resources to be used by the base station apparatus 100. If it is determined that there is a collision of the radio resources, the base station apparatus 100 controls the identified radio resources so as not to be used in communication between the base station apparatus 100 and the terminal apparatus 200. In the second embodiment described below, a terminal apparatus 200 acquires resource reservation information and priority information on the radio resources to be used for communication by a V2X terminal apparatus 700. The terminal apparatus 200 then notifies a base station apparatus 100 of the acquired resource reservation information and priority information. Upon reception of the notification, the base station apparatus 100 identifies radio resources to be used for communication by the V2X terminal apparatus 700, and then determines whether there is a collision of the identified radio resources. If it is determined that there is a collision of the radio resources, the base station apparatus 100 controls the identified radio resources so as not to be used in communication between the base station apparatus 100 and the terminal apparatus 200.

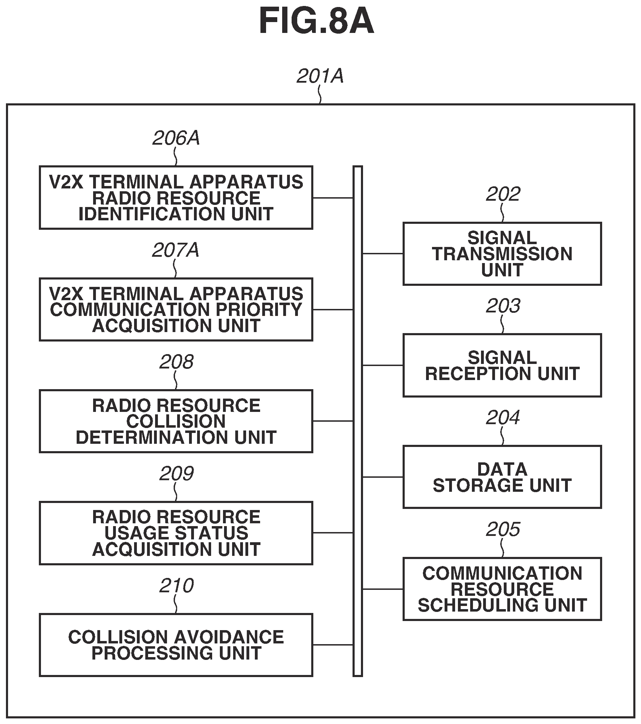

Fig. 8A is a software functional block diagram of the base station apparatus in the second embodiment.

The software functional block diagram illustrated in Fig. 8A differs from the diagram (see Fig. 2) according to the first embodiment described above in that the V2X terminal apparatus radio resource identification unit 206 is replaced with a V2X terminal apparatus radio resource identification unit 206A. Also, the V2X terminal apparatus communication priority acquisition unit 207 is replaced with a V2X terminal apparatus communication priority acquisition unit 207A.

The V2X terminal apparatus radio resource identification unit 206A identifies radio resources to be used for communication by the V2X terminal apparatus 700. In the present embodiment, the V2X terminal apparatus radio resource identification unit 206A identifies radio resources to be used for communication by the V2X terminal apparatus 700, based on notification information from the terminal apparatus 200 received by the signal reception unit 203. Further details of the method for identifying radio resources will be described below.

The V2X terminal apparatus communication priority acquisition unit 207A acquires the priority of data that is scheduled to be transmitted by the V2X terminal apparatus 700. In the present embodiment, the V2X terminal apparatus communication priority acquisition unit 207A acquires the priority based on the notification information from the terminal apparatus 200 received by the signal reception unit 203. Further details of the method for acquiring the priority will be described below.

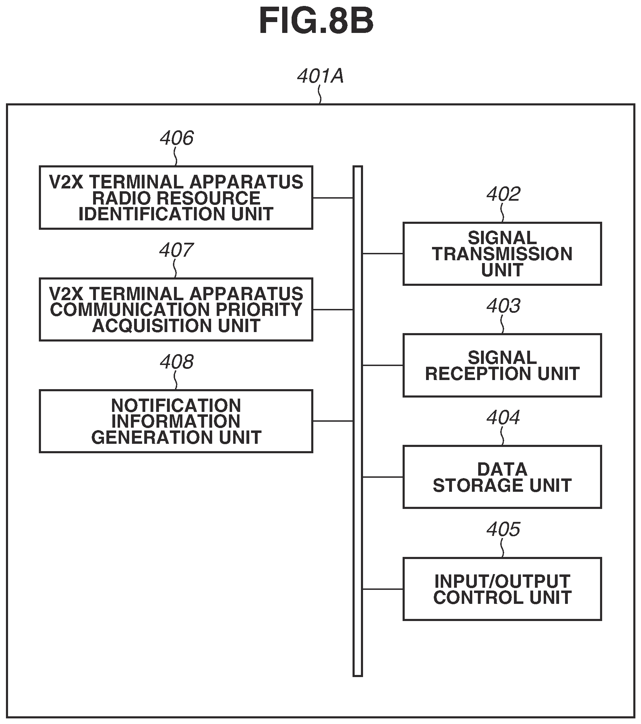

Fig. 8B is a block diagram illustrating a software functional block 401A of the terminal apparatus according to the second embodiment. The block diagram illustrated in Fig. 8B differs from the block diagram (see Fig. 4) according to the first embodiment described above in that the terminal apparatus includes a V2X terminal apparatus radio resource identification unit 406 and a V2X terminal apparatus communication priority acquisition unit 407. The terminal apparatus according to the second embodiment also differs from the first embodiment described above in that the terminal apparatus includes a notification information generation unit 408.

The V2X terminal apparatus radio resource identification unit 406 identifies radio resources based on the SCI received by the signal reception unit 403. The method for identifying radio resources may be the same as the method described above with reference to Fig. 7. That is, the V2X terminal apparatus radio resource identification unit 406 identifies radio resources based on resource reservation information included in the SCI received via the PSCCH.

The V2X terminal apparatus communication priority acquisition unit 407 acquires the priority based on a first field F01 among first to twelfth fields (F01 to F12) of the SCI received via the PSCCH.

The notification information generation unit 408 generates notification information for each of the V2X terminal apparatus radio resource identification unit 206A and the V2X terminal apparatus communication priority acquisition unit 207A of the base station apparatus 100 to function. That is, the notification information includes information that enables the V2X terminal apparatus radio resource identification unit 206A to identify the radio resources to be used for communication by the V2X terminal apparatus 700. The notification information also includes information that enables the V2X terminal apparatus communication priority acquisition unit 207A to acquire the priority of data that is scheduled to be transmitted by the V2X terminal apparatus 700. The notification information may include the SCI itself, or may also include information derived based on the SCI (e.g., information that directly indicates the radio resources and/or the priority).

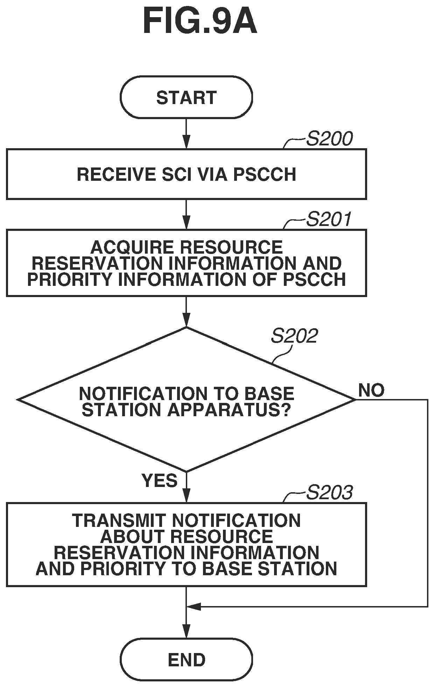

Fig. 9A is a diagram illustrating a flowchart of processing performed by the terminal apparatus 200 according to the present embodiment to acquire resource reservation information of radio resources to be used for communication by the V2X terminal apparatus 700 and priority information, and notify the base station apparatus 100 of the acquired information. This flowchart may be started by a control unit 301 before starting communication with the base station apparatus 100. Alternatively, the flowchart may also be started by the control unit 301 when the terminal apparatus 200 connects to the base station apparatus 100.

This flowchart may also be performed by the control unit 301 reading and executing a computer program stored in the storage unit 302. After the flowchart is started, the program is executed continuously while the terminal apparatus 200 is operating.

After start of the processing in Fig. 9A, in step S200, the terminal apparatus 200 receives SCI via the PSCCH.

In step S201 following step S200, the terminal apparatus 200 acquires resource reservation information and priority information of the PSSCH based on the SCI received in step S200.

In step S202, the terminal apparatus 200 determines whether it is time to notify the base station apparatus 100 of the resource reservation information of the radio resources to be used by the V2X terminal apparatus 700 and the priority information acquired in step S201. This determination may also be based on the PSSCH resource reservation information acquired in step S201. For example, the terminal apparatus 200 identifies the radio resources to be used for communication by the V2X terminal apparatus 700, based on resource reservation information of the PSSCH acquired in step S201. If there is a collision between the identified radio resources and the radio resources to be used in the notification to the base station apparatus 100, the result of determination in step S202 then becomes No. This determination may also be based on the priority information acquired in step S201. For example, if the value of the acquired priority is "1" and the threshold serving as a criterion for determining whether the priority is high or low is "3", the result of determination in step S202 is No.

If the result of determination in step S202 is No, the processing is ended without notification to the base station apparatus 100. In contrast, if the result of determination in step S202 is Yes, the terminal apparatus 200 notifies, in step S203, the base station apparatus 100 of the information acquired in step S201.

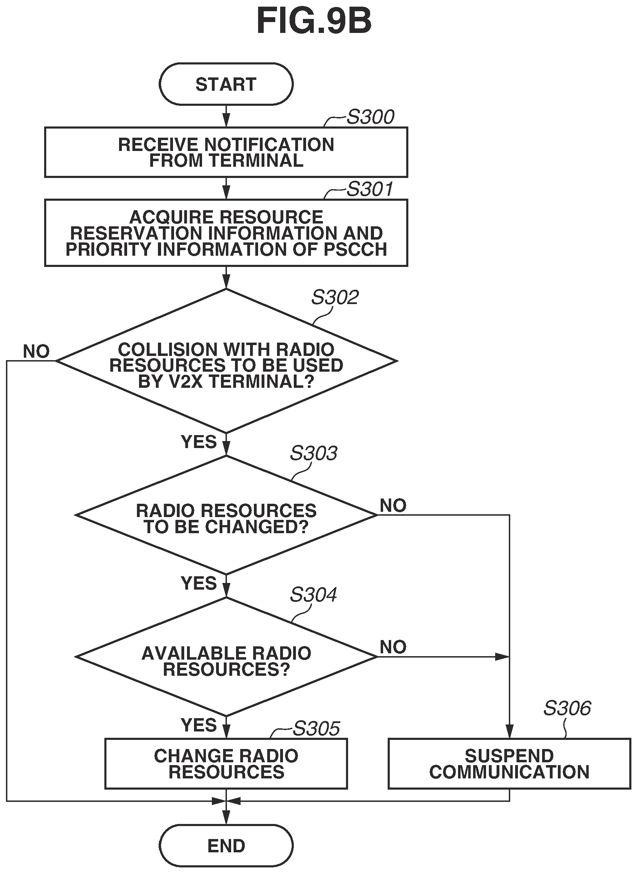

Fig. 9B is a diagram illustrating a flowchart of processing performed by the base station apparatus 100 according to the present embodiment. Referring to Fig. 9B, the base station apparatus 100 identifies radio resources to be used for communication by the V2X terminal apparatus 700 based on the notification received from the terminal apparatus 200, and then determines whether there is a collision between the identified radio resources and the radio resources to be used by the base station apparatus 100. If determining that there is a collision of radio resources, the base station apparatus 100 controls the identified radio resources so as not to be used in communication between the base station apparatus 100 and the terminal apparatus 200.

Specifically, after start of the processing in Fig. 9B, in step S300, the base station apparatus 100 receives a notification from the terminal apparatus 200 via the PUCCH or PUSCH. PUCCH is an abbreviation for Physical Uplink Control Channel, and PUSCH is an abbreviation for Physical Uplink Shared Channel.

In step S301 following step S300, the base station apparatus 100 acquires resource reservation information and priority information of the PSSCH based on the notification received from the terminal apparatus 200 in step S300. Based on the acquired resource reservation information, the base station apparatus 100 identifies the radio resources to be used by the V2X terminal apparatus 700.

In step S302, the base station apparatus 100 determines whether there is a collision between the radio resources to be used for communication with the terminal apparatus 200 and the radio resources to be used by the V2X terminal apparatus 700 identified in step S301.

If the result of determination in step S302 is No, the processing is ended. If the result of determination in step S302 is Yes, the base station apparatus 100 determines, in step S303, whether to change the radio resources to be used for communication with the terminal apparatus 200. This determination may be based on the priority information acquired in step S301. For example, if the value of the acquired priority is "1" and the threshold serving as the criterion for determining whether the priority is high or low is "3", the result of determination in step S303 becomes No.

If the result of determination in step S303 is No, the base station apparatus 100 suspends, in step S306, communication with the terminal apparatus 200. If the result of determination in step S303 is Yes, the base station apparatus 100 determines, in step S304, whether there are available radio resources.

In step S304 following step S303, the base station apparatus 100 determines whether there are available free radio resources, based on the resource reservation information acquired in step S301.

If the result of determination in step S304 is No, the base station apparatus 100 suspends, in step S306, communication with the terminal apparatus 200. In contrast, if the result of determination in step S304 is Yes, the base station apparatus 100 changes, in step S305, the radio resource to be used to the available free radio resource other than the radio resources to be used by the V2X terminal apparatus 700.

It is thereby possible to reduce the collision of radio resources that may occur between V2X sidelink communication and wireless communication other than V2X.

### [Third embodiment]

In a third embodiment, a functional configuration of a base station apparatus, a functional configuration of a terminal apparatus, and a configuration of a software functional block of the terminal apparatus may be the same as the configurations in the first and second embodiments illustrated in Figs. 1, 3, and 4.

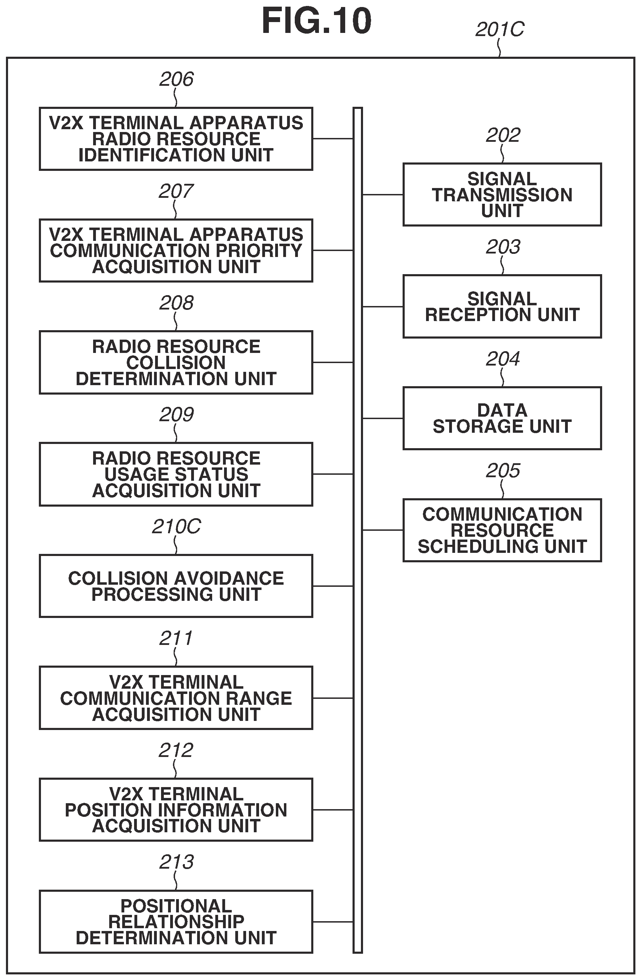

Fig. 10 is a diagram illustrating a software functional block 201C of a base station apparatus according to the third embodiment. The block diagram illustrated in Fig. 10 differs from the block diagram (see Fig. 2) according to the first embodiment described above in that the base station apparatus includes a V2X terminal apparatus communication range acquisition unit 211, a V2X terminal apparatus position information acquisition unit 212, and a positional relationship determination unit 213. The block diagram in Fig. 10 also differs from the block diagram (see Fig. 2) according to the first embodiment described above in that the collision avoidance processing unit 210 is replaced with a collision avoidance processing unit 210C.

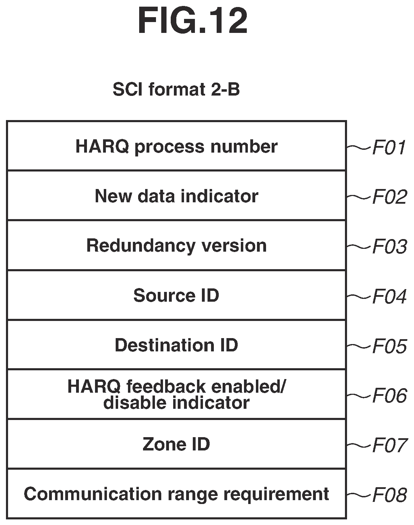

The V2X terminal apparatus communication range acquisition unit 211 acquires information on the communication region of a V2X terminal apparatus 700. Details of the method for acquiring information on the communication region (communication range) will be described below with reference to Fig. 12.

The V2X terminal apparatus position information acquisition unit 212 acquires the position information of the V2X terminal apparatus 700. Details of the method for acquiring the position information of the V2X terminal apparatus 700 will be described below with reference to Fig. 12.

The positional relationship determination unit 213 determines whether the positional relationship between the base station apparatus 100 and the V2X terminal apparatus 700 satisfies a predetermined condition, based on the communication region and position information acquired by the V2X terminal apparatus communication range acquisition unit 211 and the V2X terminal apparatus position information acquisition unit 212. The predetermined condition is a condition that is satisfied when the positional relationship is not a positional relationship in which a collision of radio resources described above may occur. Details of the predetermined condition will be described below.

The collision avoidance processing unit 210C has the following function in addition to or instead of the functions of the collision avoidance processing unit 210 according to the first embodiment described above. That is, the collision avoidance processing unit 210C functions when communication with the terminal apparatus 200 is suspended and determines whether communication with the terminal apparatus 200 can be resumed based on the result of determination by the positional relationship determination unit 213. When the predetermined condition is satisfied, the collision avoidance processing unit 210C resumes communication with the terminal apparatus 200. When the predetermined condition is not satisfied, the collision avoidance processing unit 210C prohibits resumption of communication with the terminal apparatus 200.

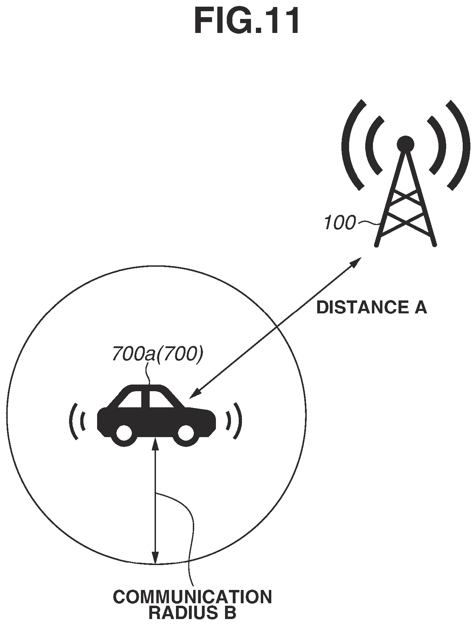

Fig. 11 is a diagram illustrating a configuration example of a wireless communication system according to the present embodiment. As illustrated in Fig. 11, the wireless communication system according to the present embodiment includes a base station apparatus 100 and a V2X terminal apparatus 700a. In reality, there may be large numbers of base station apparatuses, terminal apparatuses, and V2X terminal apparatuses, but Fig. 11 illustrates only a configuration necessary for explanation.

Fig. 12 is a diagram illustrating an example of SCI on a PSSCH according to the present embodiment. Specifically, Fig. 12 illustrates 'SCI format 2-B' used in the first and second modes of V2X communication. Referring to Fig. 12, the SCI in the PSSCH includes first to eighth fields (F01 to F08) serving as control information for V2X communication.

The first field F01 is a 'HARQ process number', which represents information for managing a Hybrid Automatic Repeat Request (HARQ) process.

The second field F02 is a 'New data indicator', which represents whether the received Transport Block (TB) has been newly transmitted or re-transmitted.

The third field F03 is a 'Redundancy version', which represents information related to a rate matching operation.

The fourth field F04 is 'Source ID', which represents information for identifying the terminal apparatus that is the transmission source.

The fifth field F05 is 'Destination ID', which represents information for identifying the terminal apparatus that is the transmission destination.

The sixth field F06 is a 'HARQ feedback enabled/disabled indicator', which represents information for enabling or disabling feedback of a hybrid automatic repeat request.

The seventh field F07 is a 'Zone ID', which represents the geographical position of the terminal.

The eighth field F08 is a 'Communication range requirement', which represents information indicating the communication region of the terminal apparatus that is the transmission source.

The receiving terminal apparatus compares the Zone ID received from the transmitting terminal apparatus with the Zone ID of the receiving terminal apparatus to calculate the approximate distance to the transmitting terminal apparatus. The receiving terminal apparatus then determines whether the receiving terminal apparatus is within the communication region of the transmitting terminal apparatus, based on the calculated distance and the communication range requirement information received from the transmitting terminal apparatus. If the receiving terminal apparatus determines that the receiving terminal apparatus is within the communication region of the transmitting terminal apparatus, the receiving terminal apparatus performs a retransmission process when reception of the PSSCH fails.

In contrast, if the receiving terminal apparatus determines that the receiving terminal apparatus is not within the communication region of the transmitting terminal apparatus, the receiving terminal apparatus does not execute a retransmission process when reception of the PSSCH fails.

Of the first to eighth fields (F01 to F08) of the SCI described above, the seventh and eighth fields (F07 and F08) indicate the geographical position and communication region of the V2X terminal apparatus 700.

That is, the base station apparatus 100 can acquire the position information and communication region information of the V2X terminal apparatus 700, based on the SCI received via the PSSCH. That is, the base station apparatus 100 can acquire the position information and communication region information of the V2X terminal apparatus 700, based on the Zone ID and communication range requirement information of the seventh and eighth fields (F07 and F08) included in the SCI.

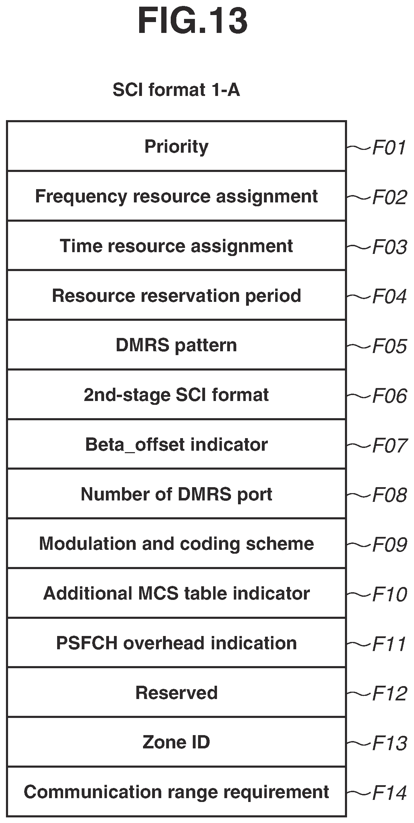

In the present embodiment, the SCI format 2-B' is used to acquire the position information and communication range information of the V2X terminal apparatus 700. However, thirteenth and fourteenth fields (F13 to F14) may also be provided in 'SCI format 1-A' as illustrated in Fig. 13. In this case, the position information and communication range information of the V2X terminal apparatus 700 may also be acquired by adding the Zone ID and the Communication range requirement and receiving 'SCI format 1-A' in Fig. 13 via the PSCCH.

Hereinafter, it will be described that, in the first and second embodiments, the base station apparatus 100 controls the communication to resume when communication between the base station apparatus 100 and the terminal apparatus 200 is suspended.

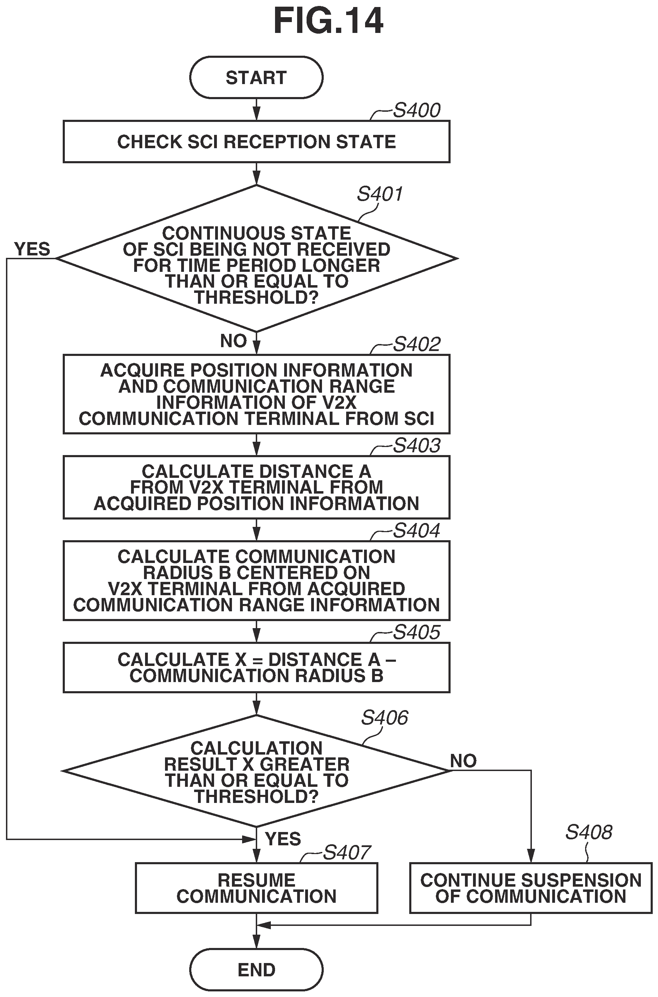

Fig. 14 is a diagram illustrating a flowchart of communication resumption processing performed by the base station apparatus 100 according to the present embodiment. This flowchart may be started by the control unit 101 when the base station apparatus 100 suspends communication with the terminal apparatus 200 to avoid the above-described collision of radio resources. Alternatively, this flowchart may be started by the control unit 101 when the base station apparatus 100 starts reception of SCI via the PSCCH.

This flowchart is also performed by the control unit 101 reading and executing a computer program stored in a storage unit 102. After start of an operation of the flowchart, the computer program is continuously executed while the base station apparatus 100 is operating.

After start of the processing in Fig. 14, the base station apparatus 100 checks, in step S400, the reception state of SCI via the PSCCH and PSSCH.

In step S401 following step S400, the base station apparatus 100 determines whether SCI has not been received for a time period longer than or equal to a threshold. If the result of determination in step S401 is Yes, the base station apparatus 100 determines, in step S407, that a predetermined condition is satisfied, and resumes communication. In contrast, if the result of determination in step S401 is No, the base station apparatus 100 acquires, in step S402, the position information and communication range information of the V2X terminal apparatus 700 from the received SCI.

In step S403 following step S402, the base station apparatus 100 calculates a distance A between the base station apparatus 100 and the V2X terminal apparatus 700, based on the position information of the V2X terminal apparatus 700 acquired in step S402.

In step S404 following step S403, the base station apparatus 100 calculates a communication radius B centered on the V2X terminal apparatus 700, based on the information on the communication region of the V2X terminal apparatus 700 acquired in step S402.

In step S405 following step S404, the base station apparatus 100 calculates a value X by subtracting the communication radius B calculated in step S404 from the distance A calculated in step S403.

In step S406, the base station apparatus 100 determines whether the value X calculated in step S405 is greater than or equal to a threshold. In other words, if the value X is greater than or equal to the threshold, it can be said that the distance between the base station apparatus 100 and the V2X terminal apparatus 700 exceeds the communication radius B (they are sufficiently far away).

If the result of determination in step S406 is Yes, the base station apparatus 100 determines that the predetermined condition is satisfied. In step S407, the base station apparatus 100 resumes the communication, and the processing is ended. In contrast, if the result of determination in step S406 is No, the base station apparatus 100 continues, in step S408, the communication suspension state, and the processing is ended.

Although the value X calculated in step S405 is used as the basis for the determination in step S406, the distance A calculated in step S403 may also be used as the basis for the determination in step S406 without using the value X.

Accordingly, even if the base station apparatus 100 stops communication to reduce a collision of radio resources with the V2X terminal apparatus 700, it is possible to resume communication at an appropriate timing. That is, after the stoppage, the base station apparatus 100 acquires the position information and communication region information on the V2X terminal apparatus 700, and determines whether to resume communication based on the acquired information, thereby making it possible to resume communication.

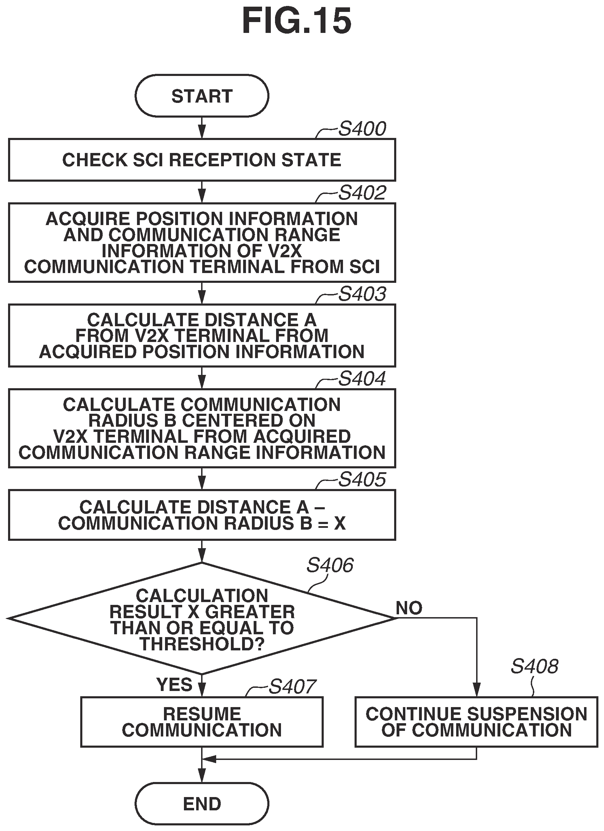

Referring to Fig. 14, it is determined whether SCI has not been received for a time period longer than or equal to a threshold. However, this determination may also be omitted as in a modification illustrated in Fig. 15.

### Other Embodiments

The present disclosure can also be carried out by supplying a program that implements one or more of the functions of the above-described embodiments to a system or apparatus via a network or a storage medium, and causing one or more processors in the computer of the system or apparatus to read and execute the program. The present disclosure can also be carried out by a circuit (e.g., an ASIC or FPGA) that implements one or more of the functions.

That is, a recording medium on which a program code for software that implements the above-described functions is recorded may be supplied to a system or apparatus, and a computer in the system or apparatus may read and execute the program code stored on the recording medium. In this case, the program code itself read from the storage medium implements the functions of the above-described embodiments, and the storage medium on which the program code is stored constitutes an element of the present embodiment.

Examples of the storage medium for supplying the program code include a flexible disk, a hard disk, an optical disk, a magneto-optical disk, a compact disc read only memory (CD-ROM), a CD recordable (CD-R), a magnetic tape, a non-volatile memory card, a ROM, a digital versatile disc (DVD), and the like.

In addition, the above-described functions may also be implemented by the computer reading and executing the program, as well as by the OS running on the computer and performing some or all of actual processes under instructions of the program code.

The program code read from the storage medium is also written into a memory provided in a function expansion board inserted into the computer or a function expansion unit connected to the computer.

Under the instructions of the program code, a CPU included in the function expansion board or function expansion unit may also perform some or all of the actual processes to implement the above-described functions.

Although each embodiment has been described in detail above, the present disclosure is not limited to the specific embodiments, and various modifications and changes are possible within the scope of the claims. It is also possible to combine all or some of the components of the above-described embodiments.

The present disclosure is not limited to the above-described embodiments, and various modifications and variations can be made without departing from the spirit and scope of the present disclosure. Therefore, the following claims are appended to apprise the public of the scope of the present disclosure.

This application is based upon and claims the benefit of priority from Japanese patent application No. 2023-169152, filed on September 29, 2023, the disclosure of which is incorporated herein in its entirety by reference.

## Claims

1. A base station apparatus conforming to a 3rd Generation Partnership Project (3GPP^{®}) standard, comprising:
communication means for executing wireless communication different from Vehicle to Everything (V2X) communication with a first user terminal apparatus;
acquisition means for acquiring information about a first radio resource to be used in wireless communication of the communication means and a second radio resource to be used in the V2X communication performed by a second user terminal apparatus different from the first user terminal apparatus; and
control means for controlling the wireless communication of the communication means by using the information acquired by the acquisition means.

2. The base station apparatus according to claim 1, further comprising determination means for determining that a collision occurs between the first radio resource and the second radio resource.

3. The base station apparatus according to claim 2, wherein, in a case where the determination means determines that a collision occurs between the first radio resource and the second radio resource, the control means restricts or prohibits use of the first radio resource in the wireless communication.

4. The base station apparatus according to claim 1, wherein the acquisition means acquires the information about the second radio resource via a Physical Sidelink Control Channel (PSCCH).

5. The base station apparatus according to claim 1, wherein the information about the second radio resource is information based on Sidelink Control Information (SCI) and includes information related to a time resource and a frequency resource of the second radio resource.

6. The base station apparatus according to claim 2, further comprising reception means for receiving, from the first user terminal apparatus, notification information related to SCI included in a control signal for sidelink communication performed by the second user terminal apparatus via a Physical Uplink Control Channel (PUCCH) or a Physical Uplink Shared Channel (PUSCH),
wherein the determination means determines that the collision occurs based on the notification information received by the reception means.

7. The base station apparatus according to claim 6, wherein the determination means determines that the collision occurs based on information, which is information based on the notification information and information related to a time resource and frequency resource of the second radio resource.

8. The base station apparatus according to claim 1, wherein the communication means communicates using NR Unlicensed Spectrum (NR-U) defined by 3GPP^{®}.

9. The base station apparatus according to claim 1,
wherein the acquisition means acquires, based on SCI, information on priority of data scheduled to be transmitted regarding the second user terminal apparatus, and
wherein the control means suspends communication with the first user terminal apparatus in a case where the priority is greater than or equal to a threshold.

10. The base station apparatus according to claim 9,
wherein the determination means determines that there is an available free radio resource, based on information, which is information based on SCI and information related to a time resource and frequency resource of the second radio resource, and
wherein, in a case where the priority is less than a threshold and there is an available free radio resource, the control means changes the radio resource to be used for communication with the first user terminal apparatus to an available free radio resource, and, in contrast, in a case where the priority is less than a threshold but there is no available free radio resource, the control means suspends communication with the first user terminal apparatus.

11. The base station apparatus according to claim 3, wherein, in a case where SCI has not been received for a predetermined time or more after suspension of communication with the first user terminal apparatus based on a result of the determination by the determination means, the control means resumes communication with the first user terminal apparatus.

12. The base station apparatus according to claim 3,
wherein the acquisition means acquires position information and information related to a communication region of the second user terminal apparatus based on SCI,
wherein the base station apparatus further comprises different determination means for determining whether a positional relationship with the second user terminal apparatus satisfies a predetermined condition, based on the position information and information related to the communication region acquired by the acquisition means, and
wherein, in a case where SCI is received after suspension of communication with the first user terminal apparatus based on the result of the determination by the determination means, the control means resumes communication with the first user terminal apparatus based on a result of the determination by the different determination means.

13. The base station apparatus according to claim 12, wherein, based on the result of the determination by the different determination means, in a case where the predetermined condition is satisfied, the control means resumes communication with the first user terminal apparatus, and, in a case where the predetermined condition is not satisfied, the control means prohibits resumption of communication with the first user terminal apparatus.

14. The base station apparatus according to claim 12 or 13, wherein the predetermined condition is satisfied in a case where the base station apparatus is positioned outside a communication range of the second user terminal apparatus.

15. A user terminal apparatus conforming to a 3rd Generation Partnership Project (3GPP^{®}) standard, comprising:
reception means for receiving a control signal for sidelink communication via a Physical Sidelink Control Channel (PSCCH);
acquisition means for acquiring information related to a time resource and frequency resource of a radio resource to be used by another user terminal performing sidelink communication, based on Sidelink Control Information (SCI) included in the control signal received by the reception means; and
notification means for notifying a base station apparatus of the information acquired by the acquisition means via a Physical Uplink Control Channel (PUCCH) or a Physical Uplink Shared Channel (PUSCH).

16. A communication system comprising a base station apparatus and a user terminal apparatus conforming to a 3rd Generation Partnership Project (3GPP^{®}) standard,
wherein the user terminal apparatus includes:
first reception means for receiving a control signal for sidelink communication via a Physical Sidelink Control Channel (PSCCH);
acquisition means for acquiring information related to a time resource and frequency resource of a radio resource to be used by another user terminal performing sidelink communication, based on Sidelink Control Information (SCI) included in the control signal received by the first reception means; and
notification means for transmitting, to the base station apparatus, notification information based on the information acquired by the acquisition means via a Physical Uplink Control Channel (PUCCH) or a Physical Uplink Shared Channel (PUSCH), and
wherein the base station apparatus includes:
communication means for executing wireless communication different from Vehicle to Everything (V2X) communication with the user terminal apparatus;
second reception means for receiving the notification information;
acquisition means for acquiring, based on the notification information received by the second reception means, information about a first radio resource to be used in the wireless communication of the communication means and a second radio resource to be used in the sidelink communication performed by a user terminal apparatus different from the user terminal apparatus; and
control means for controlling the wireless communication of the communication means by using the information acquired by the acquisition means.

17. A control method for controlling communication conforming to a 3rd Generation Partnership Project (3GPP^{®}) standard, the method comprising:
executing wireless communication different from Vehicle to Everything (V2X) communication with a first user terminal apparatus;
acquiring information about a first radio resource to be used in the wireless communication in the executing wireless communication and a second radio resource to be used in the V2X communication performed by a second user terminal apparatus different from the first user terminal apparatus; and
controlling the wireless communication in the executing wireless communication using the information acquired in the acquiring.

18. A program for causing a computer to perform operations comprising:
executing wireless communication different from Vehicle to Everything (V2X) communication with a first user terminal apparatus;
acquiring information about a first radio resource to be used in the wireless communication in the executing wireless communication and a second radio resource to be used in the V2X communication performed by a second user terminal apparatus different from the first user terminal apparatus; and
controlling the wireless communication in the executing wireless communication using the information acquired in the acquiring.
